# FASCICULE DE BREVET EUROPEEN

(11) **EP 2 058 211 B1**
(45) Date de publication et mention de la délivrance du brevet: **29.06.2011**
(21) Numéro de dépôt: 08167862.5
(22) Date de dépôt: 29.10.2008
(51) Int. Cl.: B62D 25/10

(54) **Capot avant de véhicule automobile**
Motorhaube eines Kraftfahrzeugs
Front bonnet of an automobile

(30) Priorité: 07.11.2007 FR 0758852
(43) Date de publication de la demande: 13.05.2009
(73) Titulaire: PEUGEOT CITROËN AUTOMOBILES S.A., 78140 Vélizy Villacoublay (FR)
(72) Inventeur: Jeanneau, Clément, 92100 Boulogne Billancourt (FR); Gourvennec, Thibault, 91170 Viry-Chatillon (FR)

(56) Documents cités:
- DE-A1- 19 929 048
- US-A1- 2005 161 979

## Description

La présente invention est relative à un capot avant de véhicule automobile du type comportant une peau externe, dont chaque bord longitudinal est muni d'un rebord de peau s'étendant vers le bas, une doublure de capot, fixée sous la peau externe et dont chaque bord longitudinal extérieur est muni d'un rebord de doublure s'étendant vers le bas, chaque rebord de doublure étant fixé au rebord de peau correspondant en au moins un point de fixation.

L'invention concerne également un véhicule automobile équipé d'un tel capot avant.

Fréquemment, les véhicules automobiles comportent une ossature et un capot articulé dans sa partie arrière sur l'ossature du véhicule, de façon que son ouverture s'effectue par l'avant.

Le capot avant comprend une peau externe et une doublure de capot, fixée sous la peau externe. Chaque bord longitudinal de la peau externe est muni, à proximité de l'articulation, d'un rebord de peau s'étendant vers le bas. Chaque bord longitudinal extérieur de la doublure de capot est muni à proximité de l'articulation d'un rebord de doublure s'étendant vers le bas et fixé au rebord de peau correspondant.

Un exemple de cette technique est divulgué par le document DE 199 29 048.

Les accidents de la circulation entre un véhicule automobile et un piéton conduisent à des risques de lésions sur trois principales parties du corps du piéton : la tête suite à un choc contre le capot, la partie supérieure de la jambe suite à un choc contre le nez du capot et la partie inférieure de la jambe suite à un choc contre le pare-chocs. L'homologation d'un véhicule comprend notamment des protocoles de tests, représentatifs de ces trois aspects.

Lors d'un choc de la tête contre le capot, une zone du capot avant, heurtée par la tête, peut être une zone située à proximité de l'articulation du capot sur l'ossature. Dans cette zone, lors du choc, la peau externe s'écrase vers le bas contre la doublure de capot, puis l'articulation s'affaisse vers le bas et les bords inférieurs du rebord de peau et du rebord de doublure entrent en contact avec l'ossature du véhicule.

Cet assemblage rigide de la doublure de capot sur la peau externe au voisinage de l'articulation risque d'entraîner des lésions importantes pour le piéton lors d'un tel choc et ne permet pas l'homologation des véhicules. En effet, la tête du piéton, avec ce type d'agencement, heurte rapidement l'articulation du capot sur l'ossature, constituant un point dur et donc une source de blessures importantes.

L'invention a pour but d'augmenter la déformation du capot avant, dans la zone située au voisinage de l'articulation du capot sur l'ossature, lors d'un choc avec la tête d'un piéton, afin de réduire les risques de lésions du piéton.

A cet effet, l'invention a pour objet un capot avant du type précité, caractérisé en ce que sur au moins un côté, le rebord de peau et le rebord de doublure correspondant comportent chacun un évidement, les deux évidements étant en regard l'un de l'autre et adjacents audit point de fixation, afin d'augmenter la déformation du capot au voisinage dudit point de fixation lors d'un choc avec un piéton.

Suivant d'autres modes de réalisation, le capot avant comprend une ou plusieurs des caractéristiques suivantes, prises isolément ou suivant toutes les combinaisons techniquement possibles :
- la peau externe est une tôle de forme incurvée,
- la peau externe et/ou la doublure de capot sont formées par emboutissage d'un flanc de tôle,
- chaque rebord de peau et chaque rebord de doublure sont au voisinage de l'extrémité arrière du bord longitudinal correspondant,
- chaque rebord de doublure comporte au moins une nervure s'étendant sensiblement verticalement et disposée entre deux évidements, ledit point de fixation étant prévu sur la nervure,
- chaque rebord de doublure est relié au rebord de peau correspondant en au moins deux points de fixation, ledit évidement étant prévu entre ces deux points,
- chaque point de fixation est un point de soudure, et
- chaque évidement est une encoche ménagée sur le bord inférieur du rebord correspondant.

L'invention a également pour objet un véhicule automobile du type comprenant un capot avant, une ossature, et sur chaque côté du véhicule, un charnon fixe solidaire de l'ossature et un charnon mobile solidaire du capot avant, relié au charnon fixe par une articulation, caractérisé en ce que le capot avant est tel que défini ci-dessus.

Suivant un mode de réalisation, le rebord de peau et le rebord de doublure correspondant sont au voisinage du charnon fixe correspondant.

L'invention et ses avantages seront mieux compris à la lecture de la description qui va suivre, donnée uniquement à titre d'exemple et faite en référence aux dessins annexés, sur lesquels :
- la figure 1 est une vue en perspective de dessous d'un capot avant selon l'invention ;
- la figure 2 est un agrandissement de la zone encerclée II de la figure 1 ;
- la figure 3 est une vue en coupe selon la ligne III-III de la figure 2 ;
- la figure 4 est une vue en coupe verticale et en perspective de l'arrière, d'un véhicule automobile au voisinage de l'extrémité arrière gauche du capot avant selon l'invention, avant un choc avec la tête d'un piéton ; et
- la figure 5 est une vue analogue à la figure 4, après un choc avec la tête d'un piéton.

Dans la suite de la description, les termes « avant », « arrière », « droite », « gauche », « haut », « bas », « longitudinal », « transversal » et « vertical » s'entendent par référence au système d'axe orthogonal usuel des véhicules automobiles représentés sur certaines figures et possédant :
- un axe longitudinal X dirigé de l'arrière vers l'avant ;
- un axe transversal Y dirigé de la droite vers la gauche ; et
- un axe vertical Z dirigé du bas vers le haut.

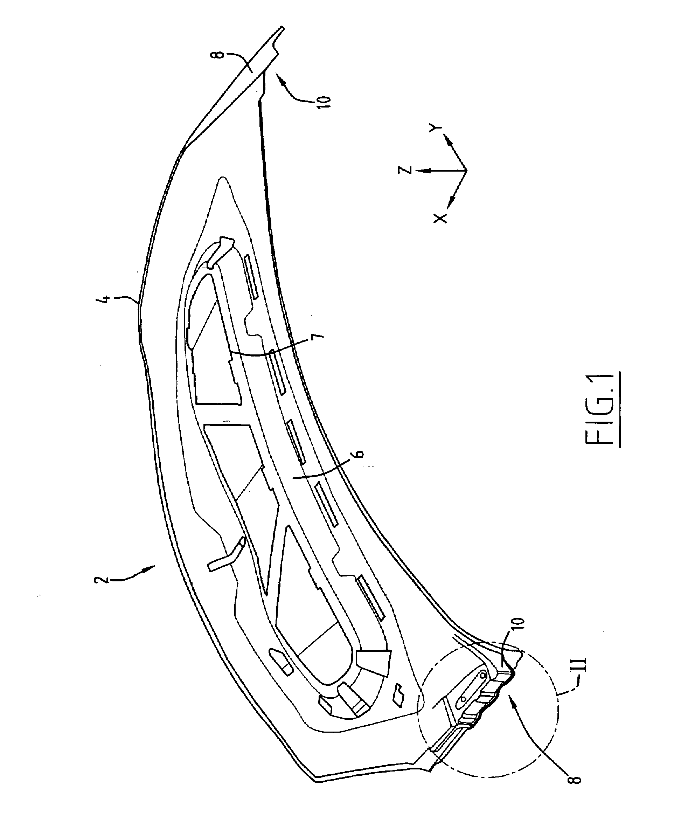

Tel que représenté sur la figure 1, un capot avant 2 d'un véhicule automobile comporte, de manière classique, une peau externe 4 et une doublure de capot 6, fixée sous la peau externe 4.

La peau externe 4 et la doublure 6 sont réalisées par découpe et emboutissage d'un flanc de tôle.

La peau externe 4 est de forme bombée vers l'extérieur. La doublure de capot 6 comporte des zones centrales évidées 7 et est ainsi munie de bords intérieurs et de bords extérieurs.

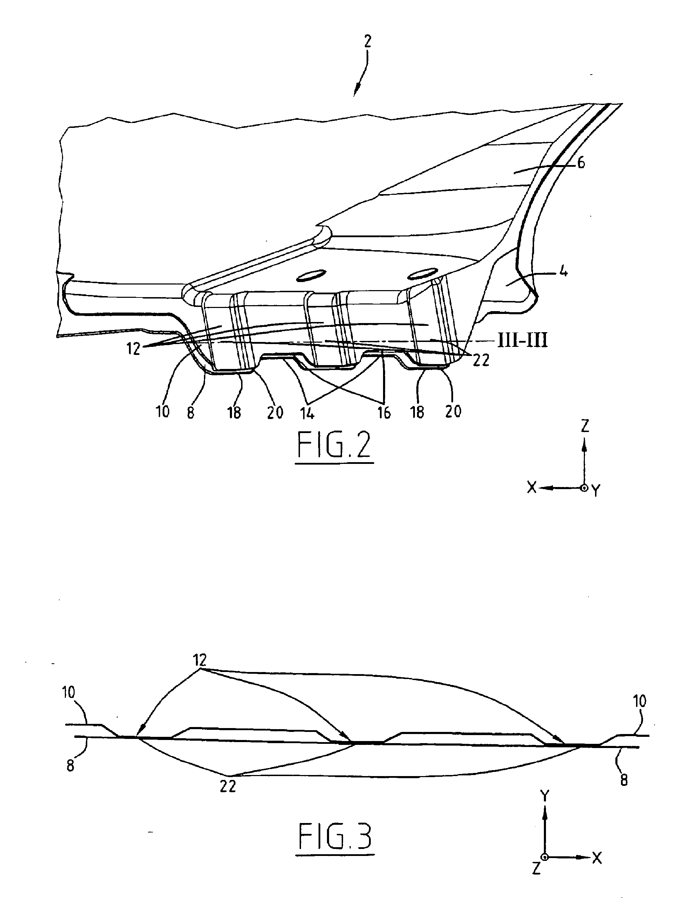

Le capot avant 2 est symétrique par rapport à un plan vertical médian. Par souci de clarté, seulement la moitié droite du capot 2 est décrite en regard des figures 2 et 3, étant entendu que la description est identique pour l'autre moitié du capot 2. Les références sur les différentes figures sont valables pour les deux moitiés du capot 2.

Sur la figure 2, illustrant une partie arrière de la moitié droite du capot 2, le bord longitudinal de la peau externe 4 est muni au voisinage de son extrémité arrière d'un rebord de peau 8 s'étendant vers le bas, sensiblement verticalement. Le bord longitudinal extérieur de la doublure de capot 6 est muni au voisinage de son extrémité arrière d'un rebord de doublure 10 s'étendant vers le bas, sensiblement verticalement.

Le rebord de doublure 10 comporte trois nervures 12, s'étendant sensiblement verticalement et sur toute la hauteur du rebord 10. Les nervures 12, visibles en coupe sur la figure 3, ont une section en forme de trapèze.

Le rebord de peau 8 et le rebord de doublure 10 comportent chacun deux évidements 14, respectivement 16, lesdits évidements 14 du rebord 8 étant en regard des évidements 16 du rebord 10.

Les évidements 14, 16 sont des encoches ménagées sur le bord inférieur 18, respectivement 20, du rebord 8, respectivement 10. Les encoches 14, 16 sont en forme d'un trapèze dont la grande base est une partie du bord 18, 20.

Chaque encoche 14, 16 est prévue entre deux nervures 12 adjacentes et s'étend sensiblement sur toute la distance qui sépare ces deux nervures.

Le rebord de doublure 10 est fixé au rebord de peau 8 en trois points 22 de fixation, un point 22 étant prévu sur chaque nervure 12. Chaque point 22 est un point de soudure.

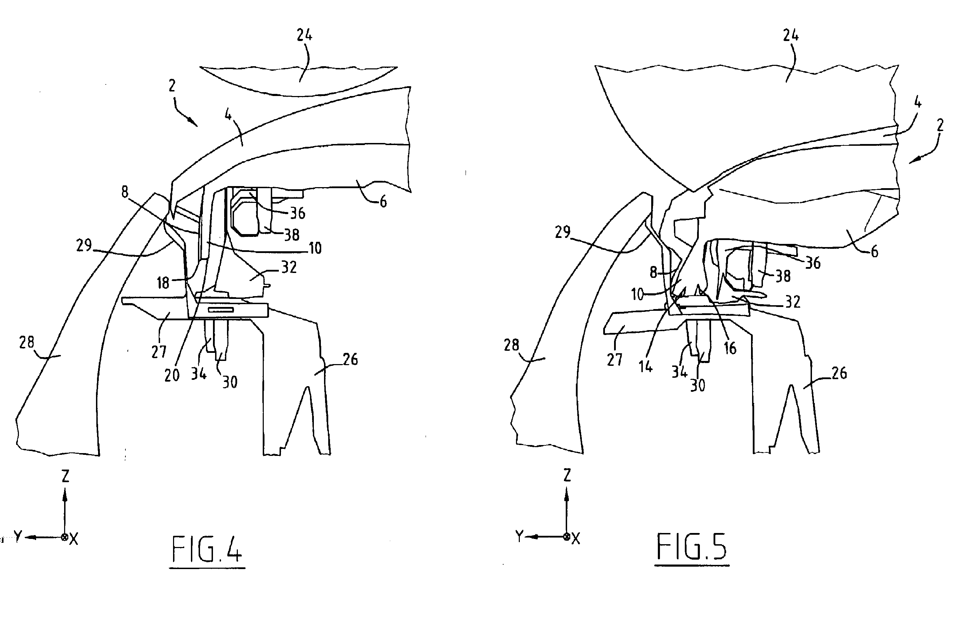

La figure 4 illustre un véhicule automobile au voisinage de l'extrémité arrière gauche du capot 2, avant un choc avec la tête 24 d'un piéton. Le véhicule automobile est notamment muni d'une ossature 26. Celle-ci comporte un support sensiblement horizontal 27 sur lequel est fixée une aile avant 28, par l'intermédiaire d'une patte de fixation 29 en saillie sur la face intérieure de l'aile et de moyens de fixation 30. La tête 24 du piéton est illustrée à proximité de la peau externe 4.

Un charnon fixe 32, solidaire du support 27 par l'intermédiaire de moyens de fixation 34, est relié par un axe d'articulation à un charnon mobile 36, solidaire de la doublure de capot 6 par l'intermédiaire de moyens de fixation 38. Le capot avant 2 est ainsi apte à être articulé dans sa partie arrière sur l'ossature 26 du véhicule.

Le rebord de peau 8 et le rebord de doublure 10 sont au voisinage du charnon fixe 32. Les rebords 8, 10 sont également à proximité du support 27 et de la patte 29 de l'aile avant 28. Plus précisément, ces rebords se trouvent entre le charnon 32 et la patte 29, avec leur bord inférieur 18, 20 à une petite distance verticale du support 27.

Sur la figure 5, vue analogue à la figure 4 après un choc avec la tête 24 d'un piéton, la peau externe 4 et la doublure de capot 6 sont déformées sous la tête 24. Le charnon mobile 36 est affaissé sur le charnon fixe 32.

De par les encoches 14, 16, les rebords 8, 10 sont déformés lorsque ces derniers entrent en contact avec le support 27 de l'ossature 26, la patte 29 de l'aile avant 28 et/ou le charnon fixe 32. Les bords 18, 20 des rebords 8, 10 s'orientent suivant différentes directions, espacées angulairement les unes des autres, de part et d'autre des encoches 14, 16, sensiblement à la manière d'un éventail.

De par les encoches 14, 16, le pliage des rebords 8, 10 est facilité, et la déformation du capot avant 2 est ainsi augmentée.

La déformation du capot avant 2 étant plus importante dans cette zone, le choc est mieux absorbé par le capot avant, ce qui a pour effet de réduire les risques de lésions pour le piéton.

Il est à noter que les fixations des différentes pièces ne sont pas dégradées. En effet, les encoches 14, 16 sont réalisées autour des points de fixation 22 et ne modifient pas la liaison entre le charnon mobile 36 et le charnon fixe 32.

Les encoches 14, 16 permettent également de réaliser un gain de masse pour le capot avant.

En variante, les évidements 14, 16 sont des orifices ménagés dans le rebord 8, 10 correspondant et à distance du bord 18, 20 du rebord 8, 10 correspondant, entre les nervures 12.

En variante, le rebord de doublure 10 est fixé au rebord de peau 8 par sertissage ou encore par d'autres moyens de fixation, tels que des rivets.

En variante ou en supplément, le rebord de doublure 10 et le rebord de peau 8 sont espacés de l'extrémité arrière du bord longitudinal.

En variante, le nombre de nervures 12 et donc le nombre d'évidements 14, 16 sont ajustés de façon à ce que le capot présente une déformation suffisante en cas de choc avec la tête d'un piéton. Ceci peut notamment être adapté en fonction de la taille du capot, du matériau constituant la peau externe 4 et la doublure de capot 6 et de son épaisseur...

## Revendications

1. Capot avant (2) de véhicule automobile du type comportant :
- une peau externe (4), dont chaque bord longitudinal est muni d'un rebord de peau (8) s'étendant vers le bas,
- une doublure de capot (6), fixée sous la peau externe (4) et dont chaque bord longitudinal extérieur est muni d'un rebord de doublure (10) s'étendant vers le bas, chaque rebord de doublure (10) étant fixé au rebord de peau (8) correspondant en au moins un point (22) de fixation,
**caractérisé en ce que** sur au moins un côté, le rebord de peau (8) et le rebord de doublure (10) correspondant comportent chacun un évidement (14, 16), les deux évidements (14, 16) étant en regard l'un de l'autre et adjacents audit point (22) de fixation, afin d'augmenter la déformation du capot (2) au voisinage dudit point (22) de fixation lors d'un choc avec un piéton.

2. Capot avant (2) selon la revendication 1, **caractérisé en ce que** la peau externe (4) est une tôle de forme incurvée.

3. Capot avant (2) selon la revendication 1 ou 2, **caractérisé en ce que** la peau externe (4) et/ou la doublure de capot (6) sont formées par emboutissage d'un flanc de tôle.

4. Capot avant (2) selon l'une quelconque des revendications précédentes, **caractérisé en ce que** chaque rebord de peau (8) et chaque rebord de doublure (10) sont au voisinage de l'extrémité arrière du bord longitudinal correspondant.

5. Capot avant (2) selon l'une quelconque des revendications précédentes, **caractérisé en ce que** chaque rebord de doublure (10) comporte au moins une nervure (12) s'étendant sensiblement verticalement et disposée entre deux évidements (16), ledit point (22) de fixation étant prévu sur la nervure (12).

6. Capot avant (2) selon l'une quelconque des revendications précédentes, **caractérisé en ce que** chaque rebord de doublure (10) est relié au rebord de peau (8) correspondant en au moins deux points (22) de fixation, ledit évidement (14, 16) étant prévu entre ces deux points (22).

7. Capot avant (2) selon l'une quelconque des revendications précédentes, **caractérisé en ce que** chaque point (22) de fixation est un point de soudure.

8. Capot avant (2) selon l'une quelconque des revendications précédentes, **caractérisé en ce que** chaque évidement (14, 16) est une encoche (14, 16) ménagée sur le bord inférieur (18, 20) du rebord (8, 10) correspondant.

9. Véhicule automobile du type comprenant :
- un capot avant (2),
- une ossature (26), et
sur chaque côté du véhicule, un charnon fixe (32) solidaire de l'ossature (26) et un charnon mobile (36) solidaire du capot avant (2), relié au charnon fixe (32) par une articulation,
**caractérisé en ce que** le capot avant (2) est conforme à l'une quelconque des revendications précédentes.

10. Véhicule automobile selon la revendication 9, **caractérisé en ce que** sur chaque côté, le rebord de peau (8) et le rebord de doublure (10) correspondant sont au voisinage du charnon fixe (32) correspondant.

## Claims

1. A front bonnet (2) of an automotive vehicle of the type comprising:
- an outer skin (4) of which each longitudinal edge is provided with a skin flange (8) extending downwards,
- a bonnet liner (6) which is fixed beneath the outer skin (4) and of which each outer longitudinal edge is provided with a liner flange (10) extending downwards,
each liner flange (10) being fixed to the corresponding skin flange (8) at at least one fixing point (22), **characterised in that** on at least one side the skin flange (8) and the corresponding liner flange (10) each include a recess (14, 16), the two recesses (14, 16) facing each other and being adjacent to said fixing point (22) in order to increase the deformation of the bonnet (2) in the vicinity of said fixing point (22) in the event of a collision with a pedestrian.

2. The front bonnet (2) according to claim 1, **characterised in that** the outer skin (4) is a curved metal sheet.

3. The front bonnet (2) according to either claim 1 or claim 2, **characterised in that** the outer skin (4) and/or the bonnet liner (6) are formed by stamping a sheet metal blank.

4. The front bonnet (2) according to any of preceding claims, **characterised in that** each skin flange (8) and each liner flange (10) are in the vicinity of the rear end of the corresponding longitudinal edge.

5. The front bonnet (2) according to any of preceding claims, **characterised in that** each liner flange (10) comprises at least one rib (12) extending substantially vertically and arranged between two recesses (16), said fixing point (22) being provided on the rib (12).

6. The front bonnet (2) according to any of preceding claims, **characterised in that** each liner flange (10) is connected to the corresponding skin flange (8) at at least two fixing points (22), said recess (14, 16) being provided between these two points (22).

7. The front bonnet (2) according to any of preceding claims, **characterised in that** each fixing point (22) is a weld point.

8. The front bonnet (2) according to any of preceding claims, **characterised in that** each recess (14, 16) is a notch (14, 16) provided on the lower edge (18, 20) of the corresponding flange (8, 10).

9. An automotive vehicle of the type comprising:
- a front bonnet (2),
- a framework (26), and
on each side of the vehicle, a fixed knuckle (32) integral with the framework (26) and a mobile knuckle (36) integral with the front bonnet (2) and connected to the fixed knuckle (32) by a hinge,
**characterised in that** the front bonnet (2) is a front bonnet in accordance with any of preceding claims.

10. The automotive vehicle according to claim 9, **characterised in that** on each side, the skin flange (8) and the corresponding liner flange (10) are in the vicinity of the corresponding fixed knuckle (32).

## Patentansprüche

1. Vordere Kraftfahrzeughaube (2) von der Art umfassend:
- eine äußere Hülle (4), von der jeder Längsrand mit einem sich nach unten erstreckenden Hüllenumschlag (8) versehen ist;
- eine Fahrzeughaubenverkleidung (6), die unter der äußeren Hülle (4) befestigt ist und von der jeder äußere Längsrand mit einem sich nach unten erstreckenden Verkleidungsumschlag (10) versehen ist,
wobei jeder Verkleidungsumschlag (10) an dem entsprechenden Hüllenumschlag (8) an mindestens einem Befestigungspunkt (22) befestigt ist,
**dadurch gekennzeichnet, dass** der Hüllenumschlag (8) und der entsprechende Verkleidungsumschlag (10) auf mindestens einer Seite jeweils eine Ausnehmung (14, 16) umfassen, wobei die beiden Ausnehmungen (14, 16) sich gegenüber und neben dem Befestigungspunkt (22) liegen, um bei einem Zusammenstoß mit einem Fußgänger die Verformung der Fahrzeughaube (2) in der Nähe des Befestigungspunktes (22) zu erhöhen.

2. Fahrzeughaube (2) nach Anspruch 1, **dadurch gekennzeichnet, dass** die äußere Hülle (4) ein Blech mit gekrümmter Form ist.

3. Fahrzeughaube (2) nach Anspruch 1 oder 2, **dadurch gekennzeichnet, dass** die äußere Hülle (4) und/oder die Fahrzeughaubenverkleidung (6) durch Tiefziehen eines Blechstücks gebildet werden.

4. Fahrzeughaube (2) nach einem der vorhergehenden Ansprüche, **dadurch gekennzeichnet, dass** jeder Hüllenumschlag (8) und jeder Verkleidungsumschlag (10) sich in der Nähe des hinteren Endes des entsprechenden Längsrandes befinden.

5. Fahrzeughaube (2) nach einem der vorhergehenden Ansprüche, **dadurch gekennzeichnet, dass** jeder Verkleidungsumschlag (10) mindestens eine Rippe (12) umfasst, die sich im Wesentlichen senkrecht erstreckt und zwischen zwei Ausnehmungen (16) angeordnet ist, wobei der Befestigungspunkt (22) auf der Rippe (12) vorgesehen ist.

6. Fahrzeughaube (2) nach einem der vorhergehenden Ansprüche, **dadurch gekennzeichnet, dass** jeder Verkleidungsumschlag (10) mit dem entsprechenden Hüllenumschlag (8) an mindestens zwei Befestigungspunkten (22) verbunden ist, wobei die Ausnehmung (14, 16) zwischen diesen beiden Punkten (22) vorgesehen ist.

7. Fahrzeughaube (2) nach einem der vorhergehenden Ansprüche, **dadurch gekennzeichnet, dass** jeder Befestigungspunkt (22) eine Schweißstelle ist.

8. Fahrzeughaube (2) nach einem der vorhergehenden Ansprüche, **dadurch gekennzeichnet, dass** jede Ausnehmung (14, 16) eine Einkerbung (14, 16) ist, die auf dem unteren Rand (18, 20) des entsprechenden Umschlags (8, 10) ausgebildet ist.

9. Kraftfahrzeug von der Art umfassend:
- eine Fahrzeughaube (2),
- ein Tragwerk (26) und
auf jeder Seite des Fahrzeugs ein feststehendes Scharnierteil (32), das mit dem Tragwerk (26) fest verbunden ist, und ein bewegliches Scharnierteil (36), das mit der Fahrzeughaube (2) fest verbunden ist und mit dem feststehenden Scharnierteil (32) über ein Gelenk verbunden ist,
**dadurch gekennzeichnet, dass** die Fahrzeughaube (2) einem der vorhergehenden Ansprüche entsprechend ausgebildet ist.

10. Kraftfahrzeug nach Anspruch 9, **dadurch gekennzeichnet, dass** sich der Hüllenumschlag (8) und der entsprechende Verkleidungsumschlag (10) auf jeder Seite in der Nähe des entsprechenden feststehenden Scharnierteils (32) befinden.
